# EUROPÄISCHE PATENTANMELDUNG

(11) **EP 2 275 273 A2**
(43) Veröffentlichungstag der Anmeldung: **19.01.2011**
(21) Anmeldenummer: 10007380.8
(22) Anmeldetag: 16.07.2010
(51) Int. Cl.: B41M 3/16, B41J 3/32

(54) **Drucken und Lesen punktbasierter Codes**

(30) Priorität: 17.07.2009 CH 11302009
(71) Anmelder: Gyger, Fritz, 3645 Gwatt (Thun) (CH)
(72) Erfinder: Gyger, Reto, 3645 Gwatt (CH); Gyger, Fritz, 3645 Gwatt (CH)
(74) Vertreter: Rentsch & Partner

(57) **Zusammenfassung**

Das Verfahren dient zum Drucken von punktbasiert codierter Information auf eine zu bedruckende Oberfläche (101). Es wird eine erste Information gedruckt, indem Tropfen einer Druckzusammensetzung gemäss einem ersten Code auf die Oberfläche (101) aufgetragen werden, wodurch auf der Oberfläche (101) ein die erste Information codierendes erstes Punktmuster aus Punkten (111, 112) gebildet wird. Ferner wird eine zweite Information gedruckt, indem bei der Bildung des ersten Punktmusters seinen Punkten (111, 112) gemäss einem zweiten Code unterschiedliche Ausprägungen mindestens einer Eigenschaft zugeordnet werden. Dadurch wird auf dem ersten Punktmuster ein die zweite Information codierendes zweites Punktmuster gebildet Das so aufgedruckte Punktmuster (110) kann einerseits eine Braille-Beschriftung zur Information der Konsumenten und andererseits eine Sicherheitsinformation zwecks Fälschungsschutz beinhalten.

## Beschreibung

Die vorliegende Erfindung liegt auf dem Gebiet der Codierung von Information und insbesondere des Druckens und Lesens punktbasierter Codes wie der Braille-Schrift für Sehbehinderte und Blinde. Sie betrifft ein Verfahren zum Drucken von punktbasiert codierter Information, eine Druckvorrichtung zur Ausführung des Verfahrens, ein mit dem Verfahren und/oder der Druckvorrichtung erzeugtes Druckerzeugnis, eine Lesevorrichtung zum Lesen des Druckerzeugnisses und ein Verfahren zur Prüfung des Druckerzeugnisses.

Ein Beispiel für einen punktbasierten Code ist die Braille-Schrift, welche es stark Sehbehinderten und Blinden ermöglicht, einen schriftlichen Text taktil zu erfassen und dadurch zu lesen. In der Braille-Schrift ist jedem Zeichen ein Punktmuster zugeordnet. Die Punkte ragen als Erhöhungen aus der Ebene des Textträgers heraus und können so mit den Fingerspitzen zeilenweise abgetastet werden. Die Punkte sind auf einem vorgegebenen orthogonalen Raster angeordnet; die einzelnen Zeichen unterscheiden sich voneinander durch die Verteilung der Punkte auf dem Raster. Die Rasterweite kann dabei variieren. Bei der weit verbreiteten Braille-Schrift nach der Marburger Systematik ist jedes Zeichen mit einer Gruppe von sechs Punkten in zwei Spalten und drei Reihen codiert. Damit können 2⁶ = 64 Zeichen codiert werden. Seit einigen Jahren wird insbesondere für die Arbeit mit Computern eine Schrift aus 8 Punkten - Computerbraille - verwendet, die es erlaubt, den weit verbreiteten ASCII-Zeichensatz mit 255 Zeichen zu codieren. Dazu ist ein Raster mit acht Punkten, angeordnet in zwei Spalten und vier Reihen, notwendig.

Die am häufigsten verwendete Methode für die Herstellung von Blindenschriften, also taktilen Texten, welche für stark Sehbehinderte und Blinde lesbar sind, ist das Prägen oder Punzieren von dünnen Materialien wie Papier. Dabei drücken abgerundete Stifte das prägbare Material in ein Gegenlager und erzeugen so die für die Lesbarkeit nötige Höhe und Geometrie. Für Seriendruck wird Prägen jedoch auch mit entsprechend dem Text gefertigten Patrizen realisiert, deren Erhöhungen wie die abgerundeten Stifte das prägbare Material gegen die Vertiefungen der Matrize drücken. Die wesentlichen Nachteile bei den bekannten Prägungen liegen bei den prägbaren Materialien per se, welche meistens in Form von teuren Spezialpapieren oder Spezialfolien vorliegen müssen. Daher ist die Herstellung von Braille-Text teuer, das Volumen und das Gewicht von Braille-Büchern sind sehr gross. Ein weiterer Nachteil aller geprägten Blindenschrift-Erzeugnisse ist ihre geringe Beständigkeit gegenüber mechanischer Belastung. Zudem ist die Prägemethode für die Braille-Beschriftung von Etiketten nicht einsetzbar.

Es wurden verschiedene alternative Verfahren zur Herstellung von Blindenschriften vorgeschlagen, welche die Nachteile des Prägens vermeiden, z. B. Dosieren mit Dosierspritzen, Siebdruck oder Tintenstrahldruck. Die WO 2007/065287 A1 offenbart eine Druckvorrichtung, eine Druckzusammensetzung und ein Druckverfahren zur Herstellung von Braille-Schrift, die es erlauben, eine grosse Anzahl von Substraten mit Braille-Schrift zu bedrucken und diese durch eine UV- oder Blaulichthärtung zu fixieren. Sie beruhen auf einer speziellen "Drop-on-demand"-Tintenstrahltdruckechnologie und verwenden gesteuerte Sitzventile, vorzugsweise Elektromagnetventile, zum Erzeugen von Tropfen, deren Volumen gross genug ist um nach dem "Single-shot"-Prinzip jeweils einen Blindenschriftpunkt mit einem einzigen Tropfen herzustellen.

Es kann erforderlich sein, nach der Herstellung der Braille-Schrift ihr Vorhandensein und/oder ihre Qualität zu überprüfen. Eine solche Qualitätskontrolle kann gemäss der WO 2007/065287 A1 erfolgen, indem den Druckzusammensetzungen ein Fluoreszenzfarbstoff beigegeben wird. Dieser Farbstoff ist bei Tageslicht unsichtbar, fluoresziert jedoch bei Bestrahlung mit UV-Licht im sichtbaren Spektrum, so dass das Fluoreszenzlicht mit einer Kamera zur Auswertung aufgenommen werden kann.

Ein Anwendungsgebiet, in dem die Vorteile des Druckverfahrens gemäss der WO 2007/065287 A1 besonders zum Tragen kommen, ist die Braille-Beschriftung von Arzneimittelpackungen. Dass mindestens der Name eines Arzneimittels auf seiner Verpackung in Braille-Schrift angegeben ist, ist nicht nur ein Gebot der Fairness gegenüber Sehbehinderten und Blinden, sondern wird auch in verschiedenen nationalen und regionalen Gesetzesvorschriften verlangt. Ein Tintenstrahldruckverfahren eignet sich dafür aus den oben genannten Gründen besser als ein Prägeverfahren und ist bei bestimmten Chargengrössen auch wirtschaftlich attraktiver.

Zum Schutz gegen Produktpiraterie besteht heute in fast allen Gebieten ein grosser Bedarf nach Sicherheitsmerkmalen, mittels derer Produktfälschungen erkannt werden können. Zu diesem Zweck sind verschiedene sichtbare und unsichtbare Sicherheitsmerkmale vorgeschlagen worden, z. B. zwei- oder mehrdimensionale Strichcodes, Hologramme, Kippfarben, Guillochen, Sicherheitstinten, Mikrofarbstoffe, Nanostrukturen, RFID-Etiketten oder chemische Kennzeichnungen. Der Bedarf nach Fälschungssicherheit ist bei Arzneimitteln besonders gross, weil Fälschungen auf diesem Gebiet nicht nur dem Hersteller einen wirtschaftlichen Schaden, sondern auch den Konsumenten einen gesundheitlichen Schaden zufügen. Im Zusammenhang mit der Braille-Schrift sieht die WO 2007/065287 A1 vor, die Druckzusammensetzungen mit einer DNA, einem DNA-Fragment mit bekannter Basensequenz oder mit einem Peptid mit bekannter Aminosäurensequenz zu versetzen und dadurch eindeutig zu kennzeichnen. Das Herauslesen eines solchen Sicherheitsmerkmals ist jedoch relativ aufwändig. Ausserdem bietet dieses Sicherheitsmerkmal praktisch keine Variations-und Unterscheidungsmöglichkeiten: Alle mit derselben Druckzusammensetzung hergestellten Braille-Schriften tragen dasselbe Sicherheitsmerkmal und können nicht weiter untereinander differenziert werden. Zwecks Differenzierung müsste jeweils eine neue DNA-oder Peptid-Sequenz verwendet werden.

Es ist deshalb eine Aufgabe der vorliegenden Erfindung, ein Druckverfahren anzugeben, mittels welchem einer ersten, vorzugsweise in einem punktbasierten Code formulierten Information eine zweite Information, bspw. eine Sicherheitsinformation, überlagert werden kann. Es ist eine weitere Aufgabe der Erfindung, eine Druckvorrichtung zur Ausführung des Verfahrens zu schaffen. Ferner soll ein mit dem Verfahren und/oder der Druckvorrichtung erzeugtes Druckerzeugnis zur Verfügung gestellt werden. Eine weitere Aufgabe besteht in der Schaffung einer Lesevorrichtung zum Lesen des Druckerzeugnisses. Es soll auch ein Verfahren zur Prüfung des Druckerzeugnisses angegeben werden.

Diese und andere Aufgaben werden durch die Erfindung gelöst, wie sie in den unabhängigen Patentansprüchen definiert ist. Vorteilhafte Ausführungsformen werden in den abhängigen Patentansprüchen angegeben.

Die Erfindung beruht darauf, einem ersten, punktbasierten Code mindestens einen zweiten Code zu überlagern, indem Punkten des ersten Codes unterscheidende Eigenschaften zugeordnet werden. Die unterscheidenden Eigenschaften können z. B. Farben, Fluoreszenzen, Formen, Flächenausdehnungen und/oder Höhen sein. Der zweite Code wird also in der Art eines Semagramms auf den ersten Code aufgebracht. In der klassischen linguistischen Steganographie ist ein Semagramm eine sichtlich getarnte Geheimbotschaft, die bspw. durch die Wahl einer unterschiedlichen Schriftart in einem an sich unverfänglichen Text maskiert wird. Die vorliegende Erfindung unterscheidet sich jedoch in verschiedenen Aspekten von diesem klassischen Konzept. Erstens ist die Aufgabenstellung eine andere: Es geht vorliegend um die ökonomische Nutzung eines ohnehin auf einer Oberfläche anzubringenden ersten Codes als Träger einer zweiten Information, bspw. einer Sicherheitsinformation, und weniger um die Verschlüsselung einer Geheimbotschaft. Zweitens ist erfindungsgemäss der Träger der zweiten Information ein rein punktbasierter Code, und nicht Buchstaben des üblichen Alphabets.

Dementsprechend wird beim erfindungsgemässen Verfahren zum Drucken von punktbasiert codierter Information auf eine zu bedruckende Oberfläche, eine erste Information gedruckt, indem Tropfen einer Druckzusammensetzung gemäss einem ersten Code auf die Oberfläche aufgetragen werden, wodurch auf der Oberfläche ein die erste Information codierendes erstes Punktmuster aus Punkten gebildet wird. Es wird eine zweite Information gedruckt, indem bei der Bildung des ersten Punktmusters seinen Punkten gemäss einem zweiten Code unterschiedliche Ausprägungen mindestens einer Eigenschaft zugeordnet werden, wodurch auf dem ersten Punktmuster ein die zweite Information codierendes zweites Punktmuster gebildet wird.

Der Begriff "auf dem ersten Punktmuster" ist im Zusammenhang mit der vorliegenden Erfindung nicht unbedingt in einem engen räumlichen Sinne zu verstehen, derart, dass das zweite Punktmuster tatsächlich räumlich über das erste Punktmuster gedruckt wird, sondern kann auch bedeuten, dass bei einem Muster aus diskreten Einzelpunkten diese räumlich nebeneinander oder ineinander angeordnet sind. Im Falle der Braille-Schrift ergänzen sich die beiden Punktmuster derart, dass sie zusammen den eigentlichen Text bilden.

Die Erfindung ist nicht auf solche Punktmuster beschränkt, bei denen die Punkte als diskrete Einzelpunkte vorliegen. Gemäss bestimmten Ausführungsformen werden aus den Einzelpunkten dreidimensionale, vorzugsweise taktil erfassbare, Grafiksymbole zusammengesetzt. Da die einzelnen Punkte je nach Herstellungsverfahren miteinander oder ineinander verlaufen können, müssen allenfalls weniger scharf abgegrenzte Punkte einer zweiten Information innerhalb eines Symbols, Zeichens oder einer Fläche einer ersten Information (und umgekehrt) in Kauf genommen werden.

Die mindestens eine Eigenschaft kann in der vorliegenden Erfindung z. B. eine geometrische, physikalische und/oder chemische Eigenschaft sein. Sie kann z. B. aus der Menge ausgewählt werden, welche aus Farbe, Fluoreszenz, Brechungsindex, Form, Flächenausdehnung, Höhe oder chemische Zusammensetzung besteht. Das zweite Punkmuster kann also für einen menschlichen Betrachter sichtbar oder unsichtbar sein. Im letzteren Fall kann es durch Verwendung von geeigneten Hilfsmitteln, bei Fluoreszierenden Farbstoffen etwa durch die Beleuchtung mit UVStrahlung, lesbar gemacht werden. Ein unsichtbares zweites Punktmuster kann z. B. durch Verwendung einer eine DNS enthaltenden Druckzusammensetzung erzeugt werden. Soll das zweite Punktmuster sichtbar gemacht werden können, so kann die DNA mit einem Farbstoff, der an sie bindet, eingefärbt werden. Dazu eignet sich z. B. Ethidiumbromid, welches bei Beleuchtung mit UV-Strahlung (254 nm) fluoresziert und so sichtbar wird. Es können auch mehrere verschiedene DNS verwendet werden.

Der erste Code ist vorzugsweise ein Braille-Code. Dies macht es besonders einfach, die zweite Information mittels automatischer Bilderkennung zu lesen, denn beim Braille-Code sind die Punkte auf einem orthogonalen Raster angeordnet und liegen verhältnismässig weit auseinander.

Im erfindungsgemässen Druckverfahren wird vorzugsweise eine thermisch-, UV- und/oder Blaulicht-härtbare Druckzusammensetzung verwendet, und die Tropfen werden nach ihrer Auftragung auf der zu bedruckenden Oberfläche durch Bestrahlung mit infrarotem, ultraviolettem und/oder blauem Licht zu den Punkten des ersten Punktmusters ausgehärtet. Dabei können die Tropfen ein Volumen von minimal 0.005 mm³, maximal 0.5 mm³ und bevorzugt 0.1 bis 0.2 mm³ besitzen. Die Druckzusammensetzung kann gemäss bevorzugter Ausführungsformen UV- und/oder Blaulicht-härtbare Mono- und/oder Oligomere umfassen, die aus der folgenden Menge ausgewählt sind: Acrylate, vorzugsweise Mono-, Di- oder Triacrylate, Epoxide, ungesättigte Polyester, Oxetane oder Vinylether oder Gemische davon. Die Zusammensetzung weist vorzugsweise bei einer Verarbeitungstemperatur von 40° bis 70°C eine Viskosität von etwa 50 bis 100 mPa*s auf. Es ist vorteilhaft, jeden Punkt des ersten Punktmusters mit einem einzigen Tropfen der Druckzusammensetzung zu erstellen. Diese bevorzugten Merkmale des erfindungsgemässen Verfahrens sind in der WO 2007/065287 A1 detailliert beschrieben, inzwischen auf dem Markt erhältlich und brauchen hier nicht weiter ausgeführt zu werden. Als Druckzusammensetzung kann auch ein geeigneter, möglicherweise kommerziell erhältlicher Klebstoff wie Heissleim oder ein Wachs verwendet werden.

Die erfindungsgemässe Druckvorrichtung zur Ausführung des erfindungsgemässen Verfahrens beinhaltet mindestens ein Reservoir für mindestens eine Druckzusammensetzung, mindestens einen mit dem mindestens einen Reservoir verbundenen Druckkopf mit mindestens einer Düse zum Auftragen von Tropfen der Druckzusammensetzung auf eine zu bedruckende Oberfläche, Transportmittel zur relativen gegenseitigen Bewegung des Druckkopfes und der Oberfläche und Steuermittel zur Steuerung des mindestens einen Druckkopfes. Die Druckvorrichtung ist zum Drucken einer ersten Information eingerichtet, indem der mindestens eine Druckkopf derart von den Steuermitteln steuerbar ist, dass er Tropfen der Druckzusammensetzung gemäss einem ersten Code auf die Oberfläche aufträgt, wodurch auf der Oberfläche ein die erste Information codierendes erstes Punktmuster aus Punkten gebildet wird. Die Druckvorrichtung ist ferner zum Drucken einer zweiten Information eingerichtet, indem der mindestens eine Druckkopf derart beschaffen und von den Steuermitteln steuerbar ist, dass er bei der Bildung des ersten Punktmusters den Punkten gemäss einem zweiten Code unterschiedliche Ausprägungen mindestens einer Eigenschaft zuordnet, wodurch auf dem ersten Punktmuster ein die zweite Information codierendes zweites Punktmuster erzeugbar ist.

In einer bevorzugten Ausführungsform der erfindungsgemässen Druckvorrichtung sind mindestens zwei Reservoirs für mindestens zwei unterschiedliche Druckzusammensetzungen vorhanden. Im Druckkopf sind vorzugsweise mindestens zwei von den Steuermitteln separat ansteuerbare Düsenmodule mit jeweils mindestens einer Düse vorhanden. Jedes der mindestens zwei Düsenmodule kann mit genau einem der mindestens zwei Reservoirs verbunden sein, so dass die verschiedenen Düsenmodule Druckzusammensetzungen mit unterschiedlichen physikalischen und/oder chemischen Eigenschaften auf die zu bedruckende Oberfläche abgeben. Das erste und zweite Punktmuster werden durch die Gesamtheit aller von den verschiedenen Düsenmodulen erzeugten Punkte gebildet. Dies ist durch eine entsprechend koordinierte Steuerung der verschiedenen Düsenmodule möglich.

Der mindestens eine Druckkopf kann mit dem mindestens einen Reservoir derart verbunden sein, dass ihm gas- und lichtgeschützt eine UV- oder Blaulicht-härtbare Druckzusammensetzung zuführbar ist. Der Druckkopf kann mindestens ein Ventil und eine nachgeschaltete Düse zur Erzeugung und Abgabe von einzelnen Tropfen der Druckzusammensetzung in Richtung auf die Oberfläche umfassen, wobei funktional in Druckrichtung nach der Düse mindestens eine Vorhärteeinheit am Druckkopf angeordnet ist, die eine UV- oder Blaulicht-Quelle umfasst. Bei den Ausführungsformen, bei denen auf die am Druckkopf angeordnete Vorhärteeinheit verzichtet wird, wird mittels einer nachgeschalteten Härteeinheit gehärtet. Gemäss weiterer, bevorzugter Ausführungsformen der vorliegenden Erfindung sind die erfindungsgemässen Druckköpfe, respektive der mindestens eine Druckkopf, in ein Blindenschrift-Drucksystem integriert, wie es von der Anmelderin hergestellt und von Atlantic Zeiser unter dem Namen BRAILLEJET^{™} angeboten wird. Diese bekannte Vorrichtung umfasst lediglich einen feststehenden Druckkopf, mit dem bandförmiges Druckgut im laufenden Prozess mit bis zu 30 m/min. mit Blindenschrift bedruckt werden kann. Stromabwärts vom Druckkopf ist beim BRAILLEJET^{™} eine leistungsstarke UV Härteeinheit angeordnet.

Beim erfindungsgemässen Druckerzeugnis ist punktbasiert codierte Information auf einer Oberfläche aufgedruckt. Dabei ist auf der Oberfläche ein eine erste Information gemäss einem ersten Code codierendes erstes Punktmuster aus Punkten aufgedruckt. Auf dem ersten Punktmuster ein eine zweite Information gemäss einem zweiten Code codierendes zweites Punktmuster aufgedruckt, das gebildet ist, indem den Punkten des ersten Punktmusters gemäss dem zweiten Code unterschiedliche Ausprägungen mindestens einer Eigenschaft zugeordnet sind.

Die erfindungsgemässe Lesevorrichtung zum Lesen eines erfindungsgemässen Druckerzeugnisses beinhaltet vorzugsweise eine Kamera oder einen Scanner zur Aufnahme einer Oberfläche des Druckerzeugnisses, auf welcher punktbasiert codierte Information aufgedruckt ist, und Unterscheidungsmittel zur Unterscheidung der unterschiedlichen Ausprägungen der mindestens einen Eigenschaft der Punkte des ersten Punktmusters.

In einer bevorzugten Ausführungsform beinhaltet die Lesevorrichtung eine Kamera zur Aufnahme eines Bildes des zweiten Punktmusters. Ferner kann sie eine an die Kamera angeschlossene Auswerteeinheit zur Decodierung des zweiten Punktmusters und zur Übersetzung der zweiten Information vom zweiten Code in einen anderen Code beinhalten. Alternativ zur Bildaufnahme mit der Kamera kann die Lesevorrichtung für die visuelle Auslesung der zweiten Information durch eine Person ausgebildet sein.

Die Unterscheidungsmittel können auf unterschiedliche Weise realisiert sein. Sie können z. B. als in der Kamera und/oder in der Auswerteeinheit befindliche Mittel zur Bildverarbeitung ausgebildet sein, mindestens zwei zeitlich nacheinander einzeln einschaltbare Lichtquellen mit unterschiedlichen Emissionsspektren beinhalten oder als mindestens zwei zeitlich nacheinander einzeln einsetzbare optische Wellenlängenfilter mit unterschiedlichen Durchlasseigenschaften ausgebildet sein.

Das erfindungsgemässe Druckprodukt wird gemäss bevorzugter Ausführungsformen mit einer Sicherheitsinformation ausgestattet, indem eine zweite Menge von zweiten Informationen und eine dritte Menge von dritten Informationen bereitgestellt werden. Jeder dritten Information wird eindeutig eine zweite Information zugeordnet. Es werden jeweils eine zweite Information und eine dritte Information auf das Druckprodukt aufgedruckt. Nach dem Herauslesen der beiden Informationen kann aufgrund einer Zuordnungsvorschrift festgestellt werden, ob die beiden Informationen zueinander passen. Falls ja, handelt es sich um ein Originalprodukt, falls nein, um eine Fälschung. Für einen Fälscher ist es ohne Kenntnis der Zuordnungsvorschrift praktisch unmöglich, die zueinander passenden zweiten und dritten Informationen auf das Druckprodukt aufzubringen.

Ziel des erfindungsgemässen Prüfungsverfahrens ist es, zu überprüfen, ob ein untersuchtes Druckerzeugnis bestimmte Sicherheitskriterien erfüllt oder nicht. Aufgrund der Überprüfung kann bspw. entschieden werden, ob das bedruckte Erzeugnis, z. B. eine Arzneimittelverpackung, einem Originalprodukt oder einer Fälschung zugeordnet ist.

Im erfindungsgemässen Verfahren zur Prüfung eines erfindungsgemässen Druckerzeugnisses werden zwei auf das Druckprodukt aufgedruckte Informationen gelesen. Es wird überprüft, ob die eine Information gemäss einer vorgegebenen Zuordnungsvorschrift der anderen Information zugeordnet ist. Dabei ist eine der genannten Informationen die durch das zweite Punktmuster codierte zweite Information.

Die zwei gelesenen Informationen können an eine Datenbank übermittelt werden, und die Überprüfung der Zuordnung kann anhand von in der Datenbank gespeicherten Daten erfolgen.

Ein bevorzugtes Anwendungsgebiet der Erfindung ist die Beschriftung und Prüfung von Warenverpackungen, z. B. Arzneimittelverpackungen. Die Warenverpackung wird mit einem Punktmuster bedruckt, welches zwei voneinander unabhängige Informationen trägt. Eine erste Information kann z. B. für die Konsumenten bestimmt sein und z. B. den Namen des in der Verpackung beinhalteten Arzneimittels angeben. Sie ist vorzugsweise als Braille-Beschriftung codiert. Eine zweite Information kann z. B. nur für Händler und Verkäufer bestimmt sein und eine Sicherheitsinformation zwecks Fälschungsschutz beinhalten. Sie ist den Braille-Punkten in der Art eines Semagramms überlagert.

Zusätzlich zur erfindungsgemässen Prüfung des Druckerzeugnisses kann das geprüfte Produkt anhand der Sicherheitsinformation individuell oder chargenweise identifiziert werden. Aus der Datenbank kann daher auch weitere, individuelle oder chargenweise Information über das geprüfte Produkt abgerufen und bei Bedarf an die erfindungsgemässe Lesevorrichtung übermittelt und dort angezeigt werden. Solche chargenweise Information kann z. B. bei Arzneimitteln umfassen:
- die Haltbarkeit bzw. das Ablaufdatum des Arzneimittels
- die Dosiermenge aufgrund des Medikamentenpasses
- den Text der Packungsbeilage in einer gewünschten Sprache
- die Nebenwirkungen
- die Herkunft des Medikamentes.

Individuelle Information kann zum Beispiel eine individuelle Seriennummer einer Arzneimittelpackung beinhalten.
Es kann besonders vorteilhaft sein, zum Empfang und zur Anzeige solcher Information in der Lesevorrichtung ein handelsübliches oder eigens dafür konzipiertes Mobiltelefon einzusetzen.

Die oben genannte erste Information kann gemäss vorteilhafter Ausführungsformen der Erfindung auf dem Produkt, zum Beispiel der Arzneimittelverpackung, rein visuell wahrnehmbare aufgedruckte chargenweise oder individuelle Information umfassen. Der individuellen Information zum Beispiel in Form einer individuellen Produktnummer kann in der Braille Beschriftung versteckt die zweite oder sogar eine dritte Information zugeordmet sein. Bei der Nutzung einer chargenweisen Information können erste und zweite Information vorzugsweise in der Braille-Beschriftung, zum Beispiel in Form von zwei unterschiedlichen Fluoreszenzen, codiert werden. Ein in der Braille-Beschriftung verstecktes rot fluoreszierendes Punktmuster codiert dabei zum Beispiel für ein in der selben Braille-Beschriftung, aber von anderen Punkten gebildetes grün fluoreszierendes Punktmuster.

Gemäss bevorzugter Ausführungsformen der erfindungsgemässen Verfahren, wird eine UV-und/oder Blaulicht-härtbare Druckzusammensetzung verwendet und die Tropfen werden nach ihrer Auftragung auf der zu bedruckenden Oberfläche durch Bestrahlung mit ultraviolettem und/oder blauem Licht zu den Punkten des ersten Punktmusters ausgehärtet vorzugsweise besitzen Die Tropfen ein Volumen von minimal 0.005 mm³, maximal 0.5 mm³ und bevorzugt 0.1 bis 0.2 mm³. Die Druckzusammensetzung umfasst vorzugsweise UV-und/oder Blaulicht-härtbare Mono- und/oder Oligomere, die aus der folgenden Menge ausgewählt sind: Acrylate, vorzugsweise Mono-, Di- oder Triacrylate, Epoxide, ungesättigte Polyester, Oxetane oder Vinylether oder Gemische davon. Die Zusammensetzung weist bei einer Verarbeitungstemperatur von 40 bis 70°C eine Viskosität von etwa 50 bis 100 mPa*s auf.

Verfahren nach einem der vorangehenden Ansprüche, wobei jeder Punkt (111, 112) des ersten Punktmusters mit einem einzigen Tropfen (35, 36) der Druckzusammensetzung erstellt wird.

Bevorzugte Ausführungsformen der Erfindung werden nachfolgend mit Bezugnahme auf die beiliegenden Zeichnungen erläutert.
- Figur 1: zeigt vier Punktmuster auf erfindungsgemässen Druckerzeugnissen.
- Figur 2: zeigt ein Blockdiagramm einer erfindungsgemässen Vorrichtung.
- Figur 3: zeigt einen Druckkopf einer erfindungsgemässen Druckvorrichtung in einer schematischen Seitenansicht.
- Figur 4: zeigt drei Ausführungsformen einer erfindungsgemässen Lesevorrichtung in schematischen Seitenansichten.
- Figur 5: zeigt eine Ausführungsform einer erfindungsgemässen Lesevorrichtung in einer perspektivischen Ansicht.
- Figur 6: zeigt in Blockdiagrammen zwei Ausführungsformen eines erfindungsgemässen Prüfungsverfahrens.

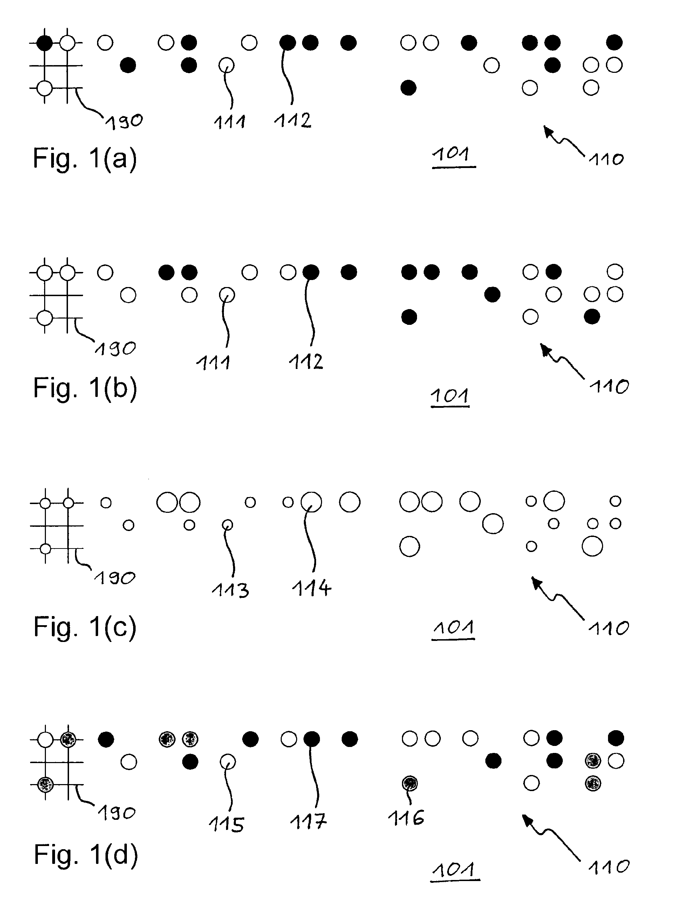

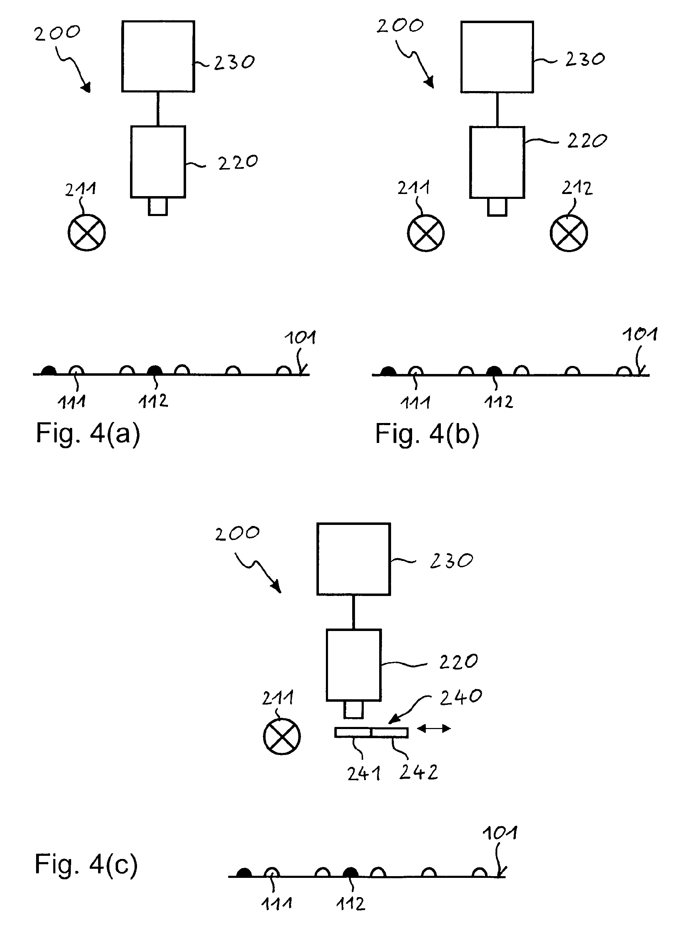

In **Figur 1** sind vier Beispiele für Punktmuster 110 auf erfindungsgemässen Druckerzeugnissen dargestellt. In jedem der Beispiele ist das Wort "MEDICAMENT" in Braille-Schrift nach der Marburger Systematik codiert. Bei dieser Braille-Codierung ist ein orthogonales Raster 190 von 2×3 = 6 Punkten, das in Figur 1 jeweils für das erste Zeichen "M" angedeutet ist, fest vorgegeben. Jedes Zeichen wird codiert, indem an jedem der sechs Rasterpunkte entweder eine mit den Fingern abtastbare Erhöhung aus einer Oberfläche 101 des Druckerzeugnisses heraus aufgetragen ist oder nicht. Es handelt sich somit um einen binären sechsstelligen Code, welcher die Codierung von 2⁶ = 64 Zeichen ermöglicht. Die Erhöhungen sind in den Draufsichten von Figur 1 schematisch als Kreise dargestellt. In einer bevorzugten Ausführungsform, in der sie Braille-Schrift codieren, müssen sie als Erhöhungen aus der Oberfläche heraus ausgebildet sein, was in den Seitenansichten von Figur 4 dargestellt ist. Die Erhöhungen bilden ein erstes Punktmuster, welches eine erste Information, hier "MEDICAMENT", gemäss dem Braille-Code codiert.

Erfindungsgemäss wird nun dem ersten Punktmuster ein zweites Punktmuster überlagert, indem den Punkten des Braille-Punktmusters gemäss einem zweiten Code unterschiedliche Ausprägungen einer physikalischen Eigenschaft zugeordnet werden. Im Beispiel von Figur 1(a) weisen die Punkte zwei unterschiedliche Helligkeiten auf, die mit weissen Punkten 111 bzw. schwarzen Punkten 112 symbolisiert sind. Bei diesem zweiten Code handelt es sich also wiederum um einen binären Code. Wenn "weiss" als 0 und "schwarz" als 1 übersetzt wird und die Werte in einer Zeile von links nach rechts und die Zeilen von oben nach unten ausgelesen werden, kann die mit dem zweiten Code codierte Information wie folgt herausgelesen werden:
10001011100111111001000100.

Diese Zeichenfolge kann auf verschiedene Arten interpretiert werden: als eine einzige Binärzahl, als Folge von Drei-Bit-Gruppen, von denen jede eine Oktalzahl codiert, als Folge von Vier-Bit-Gruppen, von denen jede eine Hexadezimalzahl codiert, als Folge von Acht-Bit-Gruppen, von denen jede ein ASCII-Zeichen codiert, etc. Selbstverständlich können die Punkte statt weiss bzw. schwarz auch in zwei verschiedenen Farben, verschiedenen Graustufen, mit zwei verschiedenen Fluoreszenzeigenschaften etc. ausgeführt sein.

Das Beispiel von **Figur 1(b)** soll veranschaulichen, dass mit dem zweiten Code gemäss Figur 1 (a) sehr viele verschiedene zweite Informationen codiert werden können. Die mit dem zweiten Code codierte zweite Information lautet hier:
00011001111101000010000101.

Sie ist offensichtlich gänzlich verschieden von derjenigen in Figur 1 (a).

Im Beispiel von **Figur 1(c)** ist mit dem zweiten Code dieselbe zweite Information wie in Figur 1(b) codiert. Die Punktmuster der Figuren 1(b) und 1(c) unterscheiden sich aber durch die Eigenschaft der Punkte, mittels welcher die zweite Information codiert wird. Während im ersteren Beispiel diese Eigenschaft eine physikalische, nämlich die Helligkeit oder Farbe der Punkte ist, ist es im letzteren Beispiel eine geometrische, nämlich ihre Flächenausdehnung. Im Beispiel von Figur 1(c) wird also z. B. 0 durch kleine Punktflächen 113 und 1 durch grosse Punktflächen 114 codiert.

Schliesslich zeigt **Figur 1(d)** ein Beispiel eines nicht-binären zweiten Codes. Die Helligkeit der Punkte hat hier z. B. drei unterschiedliche Ausprägungen, die in Figur 1 (d) als weiss 115, grau 116 und schwarz 117 dargestellt sind und die den Zeichen 0, 1 bzw. 2 entsprechen können. Im letzteren Fall lautet die mit dem zweiten Code codierte Information:
01211202200002202022101101.

Dem Fachmann sind wiederum verschiedene Arten zur Interpretation einer solchen trinären Zeichenfolge bekannt, so dass hier nicht weiter darauf eingegangen werden muss.

Selbstverständlich bestehen viele weitere Möglichkeiten, dem ersten, punktbasierten Braille-Code einen zweiten Code zu überlagern. So können die verschiedenen, anhand der Figuren 1 (a)-(d) erläuterten zweiten Codes zu einem neuen zweiten Code kombiniert werden, bspw. zu einem zweiten Code, dessen Punkte sich durch zwei verschiedene Flächenausdehnungen (siehe Figur 1(c)) und drei verschiedene Helligkeitsgrade (siehe Figur 1(d)) unterscheiden. Zur Unterscheidung der Punkte können auch weitere Eigenschaften wie ihre Form (z. B. kreisrunde vs. ovale oder dreieckige Punkte) oder die chemische Zusammensetzung ihres Materials herangezogen werden. Ausserdem gibt es viele weitere Möglichkeiten, den zweiten Code herauszulesen. Statt eines zeilenweisen Auslesens, wie in den obigen Beispielen, könnte das Auslesen Spaltenweise oder zeichenweise erfolgen. Es könnte auch nur ein Teil des Punktmusters, z. B. nur die oberste Zeile, zum Codieren der zweiten Information verwendet werden.

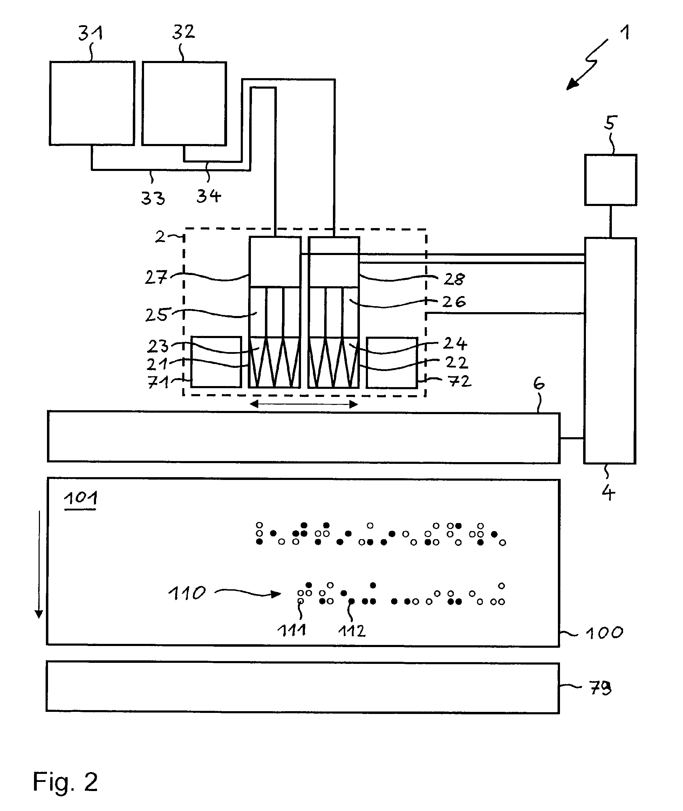

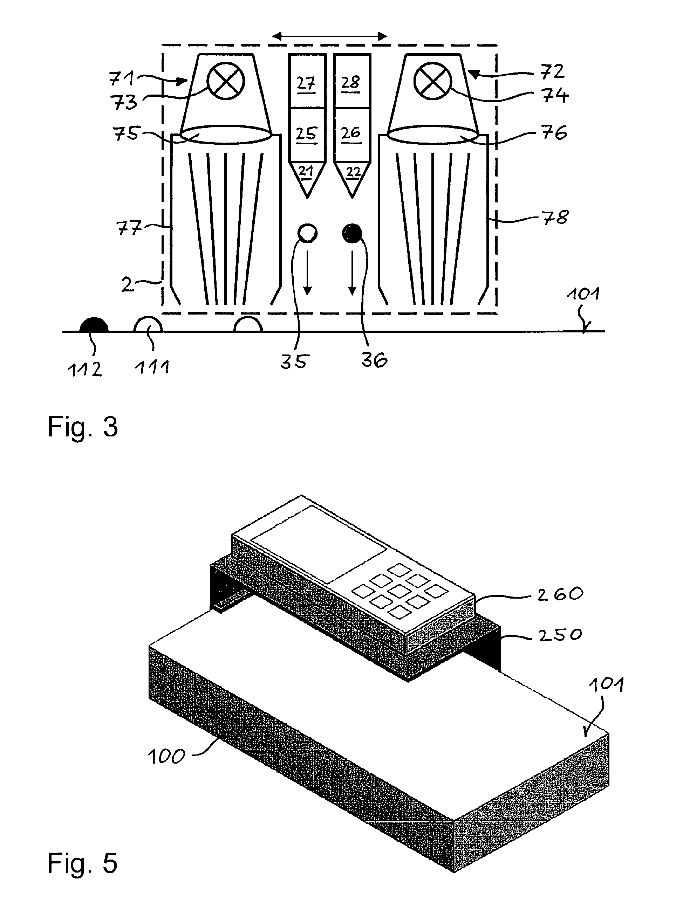

**Figur 2** zeigt ein Blockdiagramm mit Elementen der erfindungsgemässen Druckvorrichtung 1. Die Druckvorrichtung 1 weist einen Druckkopf 2 auf, der in diesem Ausführungsbeispiel mit zwei Düsenmodulen 21, 22 ausgestattet ist. Jedes der Düsenmodule 21, 22 ist über eine Zuführleitung 33, 34 mit jeweils einem Reservoir 31, 32 für eine Druckzusammensetzung derart verbunden, dass ihm aus dem Reservoir 31, 32 durch die Zuführleitung 33, 34 die Druckzusammensetzung zugeführt werden kann. Jedes der Düsenmodule 21, 22 ist ein Heizelement 27, 28 zum geregelten Aufheizen der Druckzusammensetzung auf eine geeignete Abgabetemperatur zugeordnet. Jedes der Düsenmodule 21, 22 weist eine oder mehrere einzeln ansteuerbare Düsen 23, 24 auf. Vor jeder der ist Düsen ein Ventil 25, 26, bspw. ein Elektromagnetventil, angebracht, welches durch zeitlich definierte Öffnungsimpulse die benötigten Mengen an Druckzusammensetzung dosiert und der Düse 23, 24 zuführt. Wird ihr eine solche Dosis der Druckzusammensetzung zugeführt, formt die Düse 23, 24 einen Tropfen 35, 36 (siehe Fig. 3) und sorgt für die Abgabe des Tropfens in Richtung auf eine zu bedruckende Oberfläche 101 eines Objektes 100 und für die präzise Positionierung des Tropfens auf der Oberfläche 101.

Die Aufheizung mit dem Heizelement 27, 28 kann nötig sein, um die Viskosität der Druckzusammensetzung herabzusetzen und um unabhängig von den Umgebungsbedingungen gleichbleibende Fliesseigenschaften der Druckzusammensetzung zu gewährleisten. Mit vielen zur Bildung von dreidimensionalen Punkten geeigneten Druckzusammensetzungen kann bei Raumtemperatur nicht gearbeitet werden, weil sie zu zähflüssig wären, um bei dem anliegenden Betriebsdruck als Tropfen abgegeben zu werden. Vorzugsweise wird daher die Druckzusammensetzung vor dem und/oder im Ventil 25, 26 auf eine Temperatur von 30° bis 100° C erwärmt und auf dieser Temperatur gehalten. Eine Temperatur von etwa 40° bis 60° C hat sich als besonders vorteilhaft erwiesen.

Als Betriebsdruck kommt vorteilhafter Weise ein Bereich von 1 bis 8 bar in Frage. Aus praktischen Gründen wird als Betriebsdruck 4 bar bevorzugt. Bei einem höheren Betriebsdruck kann die Heiztemperatur gesenkt werden, solange die Grenzviskosität (50 bis 100 mPa·s) zur Tropfenbildung nicht überschritten wird. Entsprechend muss bei tieferen Heiztemperaturen der Betriebsdruck solange erhöht werden, bis die Grenzviskosität (50 bis 100 mPa·s) unterschritten wird. Die Variation von Heiztemperatur und Betriebsdruck muss so gehalten werden, dass die Grenzviskosität unterschritten wird, damit die Druckzusammensetzung genügend fliessfähig für die Verarbeitung ist. Um die Tropfengrösse anzupassen, wird die Ventilöffnungszeit eingestellt, welche zwischen 150 bis 1500 Mikrosekunden beträgt.

Steuermittel 4 berechnen die angestrebte Lage der aufzudruckenden Punkte, welche in einer bevorzugten Ausführungsform wie bei einem herkömmlichen Matrixdrucker zeilenweise von den Düsen 23, 24 ausgegeben werden. Im einfachsten Fall werden dabei von den Steuermitteln 4 die seitliche Verschiebung des Druckkopfes 2, ein Einzug 6 für das zu bedruckende Objekt 100 und die Ventile 25, 26 gesteuert. Mit der erfindungsgemässen Druckvorrichtung 1 kann in bekannter Weise unidirektional oder bidirektional gedruckt werden. In einer weiteren Ausführungsform, welche für industrielle Anwendungen vorteilhaft sein kann, erfolgt die Ausgabe der Tropfen aus einem ortsfesten, nicht beweglichen Druckkopf 2, und das Objekt wird in gesteuerter Weise am Druckkopf 2 vorbei bewegt.

Die Ausführungsform von Figur 2 weist zwei Reservoirs 31, 32 für unterschiedliche Druckzusammensetzungen und zwei Düsenmodule 21, 22 auf, um die zweite Codierung zu ermöglichen. Die beiden Druckzusammensetzungen können sich z. B. in ihrer Farbe unterscheiden. Die Düsenmodule 21, 22 werden von den Steuermitteln 4 so angesteuert, dass ein erstes Düsenmodul 21 aus der ersten Druckzusammensetzung bestehende erste Punkte 111 und ein zweites Düsenmodul 22 aus der zweiten Druckzusammensetzung bestehende zweite Punkte 112 druckt. So wird ein Punktmuster 110 mit zwei unterschiedlichen Punkttypen 111, 112 erzeugt, wie sie bspw. in den Figuren 1 (a) und 1 (b) dargestellt sind. Für eine trinäre Codierung gemäss Figur 1(d) wären dementsprechend drei verschiedene Druckzusammensetzungen und drei Düsenmodule nötig. Alternativ ist es möglich, eine einzige Druckzusammensetzung zu verwenden, die zwei unterschiedlichen Düsenmodulen zugeführt wird. Die Düsenmodule könnten z. B. Düsen mit unterschiedlich grossen Düsenöffnungen haben, um unterschiedlich grosse Punkte 113, 114 gemäss Figur 1 (c) zu erzeugen.

In der Ausführungsform von Figur 2 weist der Druckkopf 2 zwei separate Düsenmodule 21, 22 auf, die von den Reservoirs 31, 32 gespiesen werden. Jeder Druckkopf kann z. B. mit sechs Düsen 23, 24 ausgestattet sein. Eine solche Unterteilung des Druckkopfes 2 in separate Düsenmodule 21, 22 ist jedoch nicht zwingend. Alternativ kann der Druckkopf eine Mehrzahl von Düsen (z. B. deren zwölf), aufweisen, von denen eine erste Gruppe (z. B. sechs Düsen) mit der Druckzusammensetzung aus dem ersten Reservoir 31 und eine zweite Gruppe mit der Druckzusammensetzung aus dem zweiten Reservoir 32 gespiesen wird.

Die Düsen 23, 24 werden in den Düsenmodulen 21, 22 vorteilhafter Weise so in einer Reihe angeordnet, dass mit einem Düsenmodul 21, 22 mehrere Punkte pro Zeilenvorschub gedruckt werden können. Die Düsen 23, 24 können in den Düsenmodulen 21, 22 versetzt angeordnet sein, um einen kleinen Punktabstand in Richtung senkrecht zum Zeilenvorschub zu gewährleisten. Bevorzugt wird eine Düsenanordnung mit drei Düsen 23, 24 entweder in einer vertikalen Reihe oder in einer Reihe schräg in Druckrichtung versetzt, um eine Standard-Blindenschriftzeile mit kompletten Zeichen in einem Durchgang zu drucken. Eine solche Düsenanordnung wird Zeilenmodul genannt. Ortsfeste Druckköpfe 2 für industrielle Anwendungen werden bevorzugt aus mehreren Zeilenmodulen mit je drei Düsen 23, 24 aufgebaut, wie sie für Braille-Schrift vorangehend bereits beschrieben sind. Auf diese Weise sind Druckköpfe 2 mit bis zu 30 Zeilenmodulen denkbar.

Die durch den ersten Code zu codierende erste Information und die durch den zweiten Code zu codierende zweite Information kann über eine Eingabeeinheit 5 den Steuermitteln 4 zugeführt werden. Die Eingabeeinheit 5 kann z. B. als Personalcomputer oder als Schnittstelle zu einem anderen, die Informationen liefernden Gerät ausgeführt sein. Die Codierung der zu druckenden Informationen und ihre Umsetzung in einen geeigneten Datenstrom ist dem Fachmann bekannt und braucht hier nicht näher erläutert zu werden.

Aus der schematischen Darstellung der **Figur 3** geht hervor, dass für den bidirektionalen Druck vorzugsweise ein Druckkopf 2 mit zwei Vorhärteinheiten 71, 72 ausgerüstet ist, die auch im Blockdiagramm von Figur 2 eingezeichnet sind. In Druckrichtung vor und hinter dem den Düsenmodulen 21, 22 sind in einer bevorzugten Ausführungsform zwei jeweils eine Blaulichtquelle 73, 74 umfassende Vorhärteeinheiten 71, 72 angebracht, von denen jeweils die in Druckrichtung nach den Düsenmodulen 21, 22 liegende Lichtquelle 73, 74 unmittelbar nach dem Drucken die Punkte 111, 112 bestrahlt und den Aushärtungsprozess der Druckzusammensetzungen startet. Beim unidirektionalen Drucken genügt es, dass eine einzelne Vorhärteeinheit in Druckrichtung nach den Düsenmodulen 21, 22 am Druckkopf 2 angeordnet und/oder betrieben ist. Wird mit einer Vorhärteeinheit 71, 72 gearbeitet, so sollte diese zumindest funktional in Druckrichtung nach den Düsenmodulen 21, 22 am Druckkopf 2 angeordnet und/oder betrieben sein. Das heisst, dass die Vorhärteeinheit 71, 72 kann durchaus auch in Druckrichtung vor oder neben den Düsenmodulen 21, 22 am Druckkopf 2 angeordnet sein, sofern sichergestellt ist, dass die Lichtstrahlung die frisch erzeugten Punkte 111, 112 auf der zu bedruckenden Oberfläche in 101 Druckrichtung nach den Düsenmodulen 21, 22 beleuchten. Dies kann zum Beispiel durch eine geeignete Auswahl und Ausrichtung von Linsen 75, 76 an der Vorhärteeinheit geschehen. Bei entsprechend hoher Viskosität der Druckzusammensetzung kann - wie zum Beispiel im aktuellen BRAILLEJET^{™} von Atlantic Zeiser - in weiteren bevorzugten Ausführungsformen der Erfindung ganz auf Vorhärteeinheiten 71, 72 verzichtet werden und die Aushärtung allein durch eine nachgeschaltete Härteeinheit bewirkt werden.

Als Blaulichtquellen 73, 74 werden vorzugsweise Hochleistungs- oder Power-LED eingesetzt, die Licht mit einer Wellenlänge von etwa 470 nm abstrahlen. Mittels Kollimatorlinsen 75, 76 wird das Licht aus den Blaulichtquellen fokussiert und die Strahlungsdichte erhöht. Somit kann die Druckgeschwindigkeit gesteigert und der Wirkungsgrad des Härtungssystems verbessert werden. In einer weiteren Ausführungsform der Erfindung sind die Hochleistungs-LED 73, 74 nicht direkt am Druckkopf 2 angebracht, sondern das Licht der stationären LEDs wird über flexible Lichtleiter in die Vorhärteeinheiten 71, 72 geleitet. In den bevorzugten Ausführungsformen wird das gebündelte Licht aus den Blaulichtquellen der Vorhärteeinheiten 71. 72 zumindest gegen die Düsenmodule 21, 22 hin abgeschattet, um sicherzustellen, dass die Tropfen 35, 36 aus den Druckzusammensetzungen erst nach dem Auftreffen auf die zu bedruckende Oberfläche 101 belichtet und damit gehärtet werden. Wie in der Figur 3 skizziert, umschliessen Abschattungen 77, 78 die Lichtquellen vorzugsweise derart, dass nur an einer der zu bedruckenden Oberfläche 101 zugewandten Seite eine Austrittsöffnung für den gebündelten Lichtstrahl offen bleibt. Der Spalt zwischen den Unterkanten der Abschattungen 77, 78 und der zu bedruckenden Oberfläche 101 ist vorzugsweise nicht grösser als 1 bis 4 mm, bevorzugt nicht grösser als 1.5 mm. Dadurch wird vermieden, dass Blaulicht die Düsenmodule 21, 22 erreicht, die Druckzusammensetzung vorzeitig belichtet wird und dadurch die Düsen 23, 24 verstopfen.

Durch die Wahl der Bezeichnung Vorhärteeinheit wird schon zum Ausdruck gebracht, dass im erfindungsgemässen Blindenschriftdrucker vorzugsweise noch eine Nachhärtungseinheit vorgesehen ist. Die grossvolumigen Tropfen 35, 36 der Druckzusammensetzung müssen unmittelbar nach dem Aufbringen auf die zu bedruckende Oberfläche 101 gehärtet werden, um ein Verlaufen zu vermeiden und um die erzeugten dreidimensionalen Strukturen zu stabilisieren. Dies führt zwangsläufig zu einem Konflikt zwischen Beleuchtungsenergie und der Druckgeschwindigkeit. Im Ausführungsbeispiel von Figur 2 wird dieser Konflikt durch die Bereitstellung einer nachgeschalteten Nachhärtungseinheit 79 gelöst. In der Nachhärtungseinheit 79 werden die vorgehärteten Punkte 111, 112 endgültig fixiert, indem sie für vorzugsweise 2 Sekunden mit Blaulicht hoher Intensität bestrahlt werden. Wie in der Figur 2 dargestellt, ist die Nachhärtungseinheit 79 in Vorschubrichtung stromabwärts vom Druckkopf 2 angeordnet und als Blaulichtleiste aus vorzugsweise einer Mehrzahl von Hochleistungs-LED aufgebaut. Die Nachhärtungseinheit 79 erstreckt sich vertikal zur Vorschubrichtung über die gesamte Seitenbreite, respektive über die gesamte Breite eines bedruckbaren Bereiches der zu bedruckenden Oberfläche 101. Die Vorschubgeschwindigkeit der zu bedruckenden Oberfläche 101 in Richtung ist wesentlich geringer als die Relativgeschwindigkeit des Druckkopfes 2 in Zeilenrichtung. Bei der Standardanwendung zum Drucken von Blindenschriftzeichen in Zeilenform ist die Nachhärtungseinheit 79 vorzugsweise in einem ganzzahligen Vielfachen der Zeilenhöhe plus Zeilenabstand von dem eigentlichen Druckbereich entfernt, so dass eine fertig gedruckte Zeile während der Zeit in der eine nachfolgende Zeile gedruckt wird im Beleuchtungsbereich der Nachhärtungseinheit 79 vorschubfrei verweilen kann.

Wenn in diesem Dokument jeweils von Blaulicht und Blaulichtquellen gesprochen wird, so soll dies nicht einschränkend sein. Die technische Lehre gilt auch für das Drucken mit UVhärtenden Druckzusammensetzungen, bei dem entsprechende UV-Lichtquellen an Stelle der Blaulichtquellen 73, 74 eingesetzt werden. Auch andere Bereiche des elektromagnetischen Spektrums als Blaulicht oder UV könnten zur Härtung eingesetzt werden.

Eine bevorzugte Ausführungsform des erfindungsgemässe Druckverfahrens basiert auf einer speziellen "Drop-On-Demand"-Drucktechnologie und unterscheidet sich von der bekannten Tintenstrahl-Drucktechnologie ganz wesentlich durch das Volumen der erzeugten Tropfen 35, 36 sowie durch die Verwendung von gesteuerten Sitzventilen 25, 26, vorzugsweise Elektromagnetventilen, zur Erzeugung der Tropfen 35, 36. Bevorzugt für das Druckverfahren werden Inlineventile der Firma Fluid Automation, oder besonders bevorzugt Mikroventile der Firma Fritz Gyger AG, CH-Thun.

Mit der vorliegenden Erfindung sind grundsätzlich alle bekannten Braille-Schriften nach allen Normen erzeugbar. Die nachfolgend beschriebenen Ausführungsformen basieren jedoch auf der Geometrie des Braille-Punktes nach Marburg-Medium-Standard und gehen von einer taktilen Auflösung beim Abtasten der Braille-Schrift durch den blinden oder sehbehinderten Leser von etwa ±0.1 mm aus. Braille-Punkte 111, 112 sowie beliebige, punktbasierte, dreidimensionale Strukturen können nach dem vorliegenden Verfahren mit einem Durchmesser von minimal 0.2 mm, maximal 2 mm und bevorzugt 1.6 mm erzeugt werden bei einer Höhe von minimal 0.05 mm und maximal 0.5 mm. Für Braille-Schrift wird eine Höhe von 0.2 bis 0.3 mm bevorzugt. Dabei wird jeder Braille- oder Relief-Punkt 111, 112 jeweils aus einem einzigen Tropfen 35, 36 erzeugt. Die zu diesem Zweck erzeugten Tropfen 35, 36 besitzen je ein Volumen von minimal 0.005 mm³, maximal 0.5 mm³ und bevorzugt 0.1 bis 0.2 mm³.

Damit aus der entsprechenden Druckzusammensetzung die geforderten Braille- oder Relief-Punkte 111, 112 mit jeweils einem einzigen Tropfen 35, 36 gedruckt werden können, ist eine Düsengeometrie mit einem Durchmesser d eines Düsenkanals von minimal 0.1 mm, maximal 0.5 mm und bevorzugt 0.20 bis 0.45 mm erforderlich. Dabei soll die Länge des Düsenkanals gleichzeitig minimal 1 x d, maximal 10 x d, bevorzugt 2 bis 3 x d betragen.

Die im erfindungsgemässen Druckverfahren verwendbaren Druckzusammensetzungen sind vorzugsweise blaulichthärtbare Zusammensetzungen, die zu annähernd 100 % vernetzende Mono- und/oder Oligomere umfassen. Wie oben beschrieben, werden relativ grossvolumige Tropfen 35, 36 auf die zu bedruckenden Oberfläche 101 appliziert, so dass zum Beispiel ein einzelner Blindenschriftpunkt 111, 112 von einem einzigen Tropfen 35, 36 gebildet wird ("Single-shot"-Prinzip). Die zu bedruckenden Oberflächen 101 umfassen Papiere, Karton, insbesondere auch beschichtete Papiere und Kartonagen, wie sie für Verpackungen eingesetzt werden. Ferner sind Folien, Klebefolien, Etiketten und jegliche Art von bedruckbaren Kunststoffen umfasst. Um zu gewährleisten, dass die einzelnen Tropfen 35, 36 beim und nach dem Auftreffen auf die zu bedruckende Oberfläche 101 nicht verlaufen, respektive um sicherzustellen, dass die Höhe jedes einzelnen Punktes 111, 112 ausreichend ist, können an die Druckzusammensetzungen spezielle Anforderungen gestellt werden. Die Viskosität der Druckzusammensetzungen, die zum "Single-shot"-Drucken geeignet sind, liegt optimal bei ca. 50 bis 100 mPa·s. Dieser Wert wird, wie oben erwähnt, vorzugsweise über die Erhöhung der Temperatur erreicht. Die Druckzusammensetzung kann auf Mono-, Di- oder Triacrylaten basieren. Diese Acrylate härten normalerweise durch einen radikalischen Polymerisationsprozess aus. Bei Acrylaten muss vorzugsweise unter Schutzgasatmosphäre (zum Beispiel Stickstoff, Argon oder CO₂) gearbeitet werden, da sonst durch die Inhibierung des Polymerisationsprozesses durch Sauerstoff eine schmierige Oberfläche entsteht. In einer zweiten bevorzugten Ausführungsform basieren die Druckzusammensetzungen auf Epoxiden, Oxetanen oder Vinylether, welche kationisch polymerisieren. Es sind auch Kombinationen der vorgängig genannten Zusammensetzungen möglich.

Weitere Einzelheiten zu den Druckvorrichtungen und Druckzusammensetzungen können der WO 2007/065287 A1 entnommen werden. Deren Lehre kann, mutatis mutandis, auf die vorliegende Erfindung übertragen werden.

**Figur 4** zeigt drei Ausführungsformen einer erfindungsgemässen Lesevorrichtung 200. Dargestellt ist jeweils ein erfindungsgemässes Druckerzeugnis 100 mit einem Punktmuster 110, dessen Punkten 111, 112 gemäss dem zweiten Code unterschiedliche Ausprägungen mindestens einer Eigenschaft zugeordnet sind. Im vorliegenden Beispiel haben die Punkte 111, 112 zwei unterschiedliche Helligkeiten oder Farben; vgl. Figuren 1 (a) und (b). Das Druckerzeugnis 100 wird mit mindestens einer Lichtquelle 211, 212 beleuchtet. Die Lesevorrichtung 200 beinhaltet vorzugsweise eine Kamera 220, mittels welcher das Punktmuster 110 abbildend aufgenommen wird. Die digitalisierten Bilder können von der Kamera 220 an eine Auswerteeinheit 230 übermittelt werden. Die Auswerteeinheit 230 kann aus den Bildern zumindest das zweite, allenfalls auch das erste Punktmuster auswerten und zumindest die zweite Information vom zweiten Code in einen anderen Code übersetzen. Der andere Code kann z. B. eine Zahl oder eine Zeichenfolge sein, mittels derer festgestellt werden kann, ob es sich beim Druckerzeugnis 100 um ein Originalprodukt oder eine Fälschung handelt. Die Auswerteeinheit 200 kann mit an sich bekannten Verfahren zur Bildverarbeitung arbeiten. Die Bildverarbeitung ist bei der vorliegenden Erfindung vergleichsweise einfach, weil in den meisten Anwendungen die erfassten Punkte in einem recht groben Raster 190 (siehe Figur 1) angeordnet sind und es nur darum geht, einige wenige Ausprägungen einer Eigenschaft der Punkte 111, 112 voneinander zu unterscheiden. Auf die dazu benötigten Unterscheidungsmittel wird weiter unten eingegangen. Die mindestens eine Lichtquelle 211, 212 kann sichtbares Licht aussenden, oder auch elektromagnetische Strahlung ausserhalb des sichtbaren Bereiches, etwa UV oder IR. Besonders vorteilhaft könnte es sein, die zur Erzeugung des zweiten Codes die Punkte 112 mit Pigmenten zu versehen, die bei UV-Beleuchtung im sichtbaren Bereich fluoreszieren. Im sichtbaren Licht ist dann der zweite Code nicht lesbar. Wird das Punkmuster 111, 112 aber mittels der mindestens einen Lichtquelle 211, 212 mit UV-Strahlung beleuchtet, so kann der zweite Code mittels der Kamera 220 im sichtbaren Bereich ausgelesen werden.

Im Beispiel von **Figur 4(a)** ist eine einzige, breitbandige Lichtquelle 211 vorhanden. Sie beleuchtet das Druckerzeugnis 100 derart, dass beide Farben der Punkte 111, 112 gleichzeitig von der Kamera 220 erfasst werden können. Die Unterscheidung der beiden Punktfarben erfolgt in der Kamera 220, indem z. B. in bekannter weise unterschiedlich ausgebildete Pixel auf die unterschiedlichen Farben ansprechen und so eine Zuordnung der Farben zu den Punkten 111, 112 möglich ist. Alternativ kann das Punktmuster 110 mit seinen unterschiedlichen Farben von einer Person visuell erfasst werden.

Die Ausführungsform gemäss **Figur 4(b)** ist mit zwei unterschiedlichen Lichtquellen 211, 212 ausgestattet. Eine erste Lichtquelle 211 beleuchtet das Druckerzeugnis 100 mit erstem Licht einer beschränkten Bandbreite, welches von einem ersten Punkttyp (z. B. von den weiss dargestellten Punkten 111) zumindest teilweise reflektiert, von einem zweiten Punkttyp (z. B. von den schwarz dargestellten Punkten 112) hingegen grösstenteils absorbiert wird. Eine zweite Lichtquelle 212 beleuchtet das Druckerzeugnis 100 mit zweitem Licht einer beschränkten Bandbreite, welches vom ersten Punkttyp 111 grösstenteils absorbiert und vom zweiten Punkttyp 112 zumindest teilweise reflektiert wird. Statt direkter Reflexion des beleuchtenden Lichtes können die Punkte 111, 112 durch das Licht zur Fluoreszenz angeregt werden. Zum Lesen der zweiten Information werden die beiden Lichtquellen 211, 212 zeitlich nacheinander einzeln eingeschaltet. In einer ersten Beleuchtungsphase bei Beleuchtung mit dem ersten Licht nimmt die Kamera 220 ein erstes Bild auf, in einer zweiten Beleuchtungsphase bei Beleuchtung mit dem zweiten Licht ein zweites Bild. Die Auswerteeinheit 230 setzt die beiden Bilder zusammen und decodiert daraus das zweite Punktmuster. Alternativ könnte auf die Kamera 220 verzichtet werden; diesfalls könnte statt der Kamera eine Person das zweite Punktmuster während der beiden Beleuchtungsphasen visuell erfassen.

Bei der dritten Ausführungsform gemäss Figur 4(c) steht wiederum, wie in Figur 4(a), eine breitbandige Lichtquelle 211 zur Verfügung. Die Unterscheidungsmittel sind hier als optischer Wellenlängenfilter 240 ausgebildet. Der Filter 240 ist räumlich in zwei Teilfilter 241, 242 aufgeteilt und kann so vor der Kamera 220 verschoben werden, dass jeweils nur ein Teilfilter 241, 242 das in die Kamera 220 gelangende Licht filtert. Ein erster Teilfilter 241 lässt Licht durch, welches von einem ersten Punkttyp (z. B. von den weiss dargestellten Punkten 111) reflektiert wird, blockiert hingegen grösstenteils Licht, welches von einem zweiten Punkttyp (z. B. von den schwarz dargestellten Punkten 112) reflektiert wird, und umgekehrt. Die Kamera 220 nimmt zwei Bilder auf, eines mit dem ersten Teilfilter 241 und eines mit dem zweiten Teilfilter 242. Ähnlich wie bei der zweiten Ausführungsform von Figur 4(b) setzt die Auswerteeinheit 230 die beiden Bilder zusammen und decodiert daraus das zweite Punktmuster. Auch bei dieser Ausführungsform könnte auf die Kamera 220 verzichtet werden und stattdessen das menschliche Auge zum visuellen Erfassen des zweiten Punktmusters eingesetzt werden.

**Figur 5** zeigt eine besonders einfache und handliche Ausführungsform einer erfindungsgemässen Lesevorrichtung 200. Ein Objekt 100, z. B. eine Arzneimittelverpackung, ist als Quader dargestellt. Auf einer oberen Fläche 101 des Objektes 100 ist eine zu lesende (in Figur 5 nicht sichtbare) Information aufgedruckt. Über der oberen Fläche 101 ist eine Halterung 250 für ein Mobiltelefon 260 mit einer (in Figur 5 nicht sichtbaren, weil der Fläche 101 zugewandten) Kamera angebracht. Die Halterung 250 ist derart ausgestaltet, dass die Kamera des in die Halterung 250 eingesetzten Mobiltelefons 260 einen wohldefinierten Abstand von der Fläche 101 aufweist. Zwischen der Fläche 101 und der Kamera können, je nach Ausführung, Unterscheidungsmittel wie nacheinander einschaltbare Lichtquellen 211, 212 mit unterschiedlichen Spektralcharakteristiken (vgl. Figur 4(b)) oder zwei Teilfilter 241, 242 mit unterschiedlichen Durchlassbereichen (vgl. Figur 4(c)) angebracht sein. Das Mobiltelefon 260 kann eine Software zur Decodierung des zweiten Punktmusters beinhalten und somit selbst als Auswerteeinheit dienen. Alternativ kann das Mobiltelefon 260 die aufgenommenen Bilder an eine externe Auswerteeinheit 230 übermitteln, wie in Figur 4 dargestellt. Das Mobiltelefon 260 kann ein handelsübliches oder ein eigens für diese Anwendung entworfenes Modell sein.

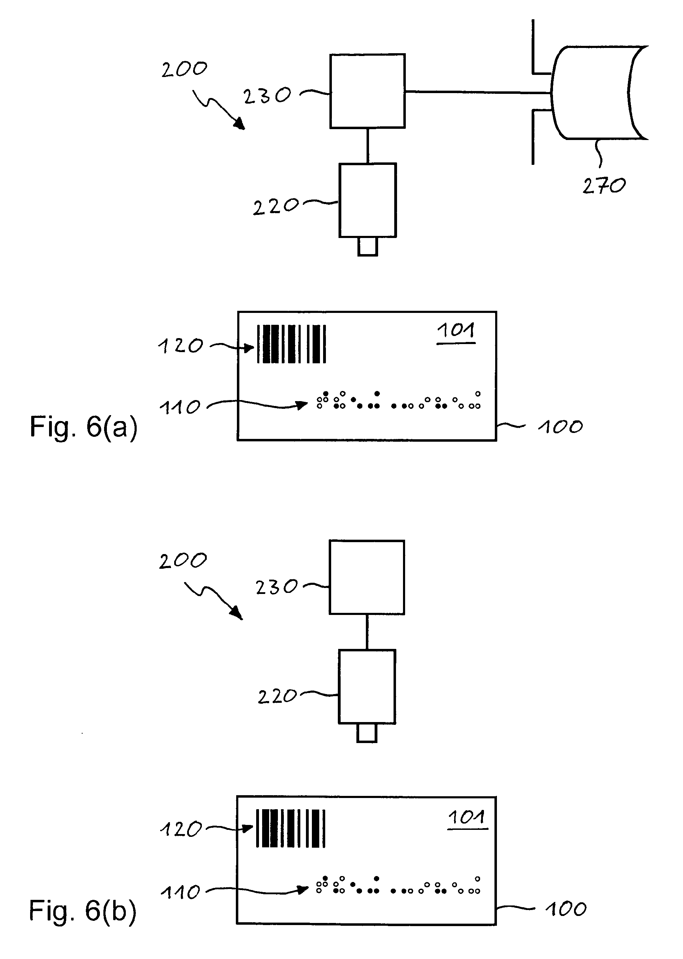

Anhand der **Figuren 6** sind zwei Ausführungsformen des erfindungsgemässen Prüfungsverfahrens erläutert. In Figur 6 dargestellt ist jeweils das erfindungsgemässe Druckprodukt 100 mit dem Punktmuster 110 und, fakultativ, einer vom Punktmuster 110 unabhängig codierten dritten Information, die z. B. mit einem eindimensionalen Strichcode 120 oder einem mehrdimensionalen Code codiert sein kann. Die dritte Information kann z. B. eine Sicherheitsnummer sein. Ausserdem kann, wie in Figur 4, eine Kamera 220 und eine Auswerteeinheit 230 benötigt werden.

Die erfindungsgemässe Lesevorrichtung 200 liest, wie oben beschrieben, das Druckerzeugnis 100 und darauf insbesondere die zweite Information. Ferner wird auch die dritte Information gelesen, was entweder durch die Kamera 220 der erfindungsgemässen Lesevorrichtung 200 selbst oder durch ein dafür eigens bereitgestelltes (nicht eingezeichnetes) Lesegerät erfolgen kann.

Gemäss der Ausführungsform von **Figur 6(a)** kommuniziert die Auswerteeinheit 230 mit einer Datenbank 270. Sie übermittelt die zweite und die dritte Information an die Datenbank 270, wo diese mit gespeicherten Daten verglichen werden. Diese Daten wurden durch den Hersteller der Originalprodukte oder ihrer Verpackungen gespeichert. So kann z. B. der dritten Information jeweils genau eine zweite Information zugeordnet sein, wobei die Zuordnung zufällig oder anhand eines Algorithmus erfolgen kann. Anhand des Vergleichs wird festgestellt, ob die zweite und die dritte Information zueinander passen. Falls ja, erfüllt das Druckerzeugnis 100 das Sicherheitskriterium, ansonsten nicht.

Alternativ könnte die Lesevorrichtung 200 nur die dritte Information lesen und an die Datenbank 270 übermitteln. In der Datenbank 270 wird die der dritten Information eindeutig zugeordnete zweite Information abgefragt und an die Lesevorrichtung 200 übermittelt. In der Lesevorrichtung 200 wird die zweite Information als ein gemäss dem zweiten Code codiertes Punktmuster auf einer geeigneten (nicht eingezeichneten) Anzeigeeinheit angezeigt. Wenn, wie in der Ausführungsform von Figur 5, in der Leseeinheit ein Mobiltelefon 260 eingesetzt wird, kann die Anzeige des Mobiltelefons 260 als Anzeigeeinheit verwendet werden. Das auf der Anzeigeeinheit angezeigte zweite Punktmuster wird nun von einem Benutzer mit dem zweiten Punktmuster 110 verglichen, welches auf dem Druckprodukt 100 aufgedruckt ist. Das aufgedruckte zweite Punktmuster 110 kann auf eine der anlässlich von Figur 4 beschriebenen Weisen oder auf eine andere Weise visuell erfasst werden. Die Datenbank 270 kann selbstverständlich mit einer Mehrzahl von erfindungsgemässen Lesevorrichtungen verbunden sein.

Die Ausführungsform von **Figur 6(b)** ist in dem Sinn autonom, als dass sie ohne externe Datenbank 270 auskommt. Hier ist die Auswerteeinheit 230 selbst in der Lage, zu prüfen, ob die zweite und die dritte Information gemäss einer vorgängig festgelegten Zuordnung übereinstimmen oder nicht. Die Prüfung erfolgt bspw. anhand einer in der Auswerteeinheit 230 gespeicherten Tabelle oder anhand eines von der Auswerteeinheit 230 ausführbaren Algorithmus.

## Patentansprüche

1. Verfahren zum Drucken von punktbasiert codierter Information auf eine zu bedruckende Oberfläche (101), wobei
eine erste Information gedruckt wird, indem Tropfen (35, 36) einer Druckzusammensetzung gemäss einem ersten Code auf die Oberfläche (101) aufgetragen werden, wodurch auf der Oberfläche (101) ein die erste Information codierendes erstes Punktmuster aus Punkten (111, 112) gebildet wird,
**dadurch gekennzeichnet,**
**dass** eine zweite Information gedruckt wird, indem bei der Bildung des ersten Punktmusters seinen Punkten (111, 112) gemäss einem zweiten Code unterschiedliche Ausprägungen mindestens einer Eigenschaft zugeordnet werden, wodurch auf dem ersten Punktmuster ein die zweite Information codierendes zweites Punktmuster gebildet wird.

2. Verfahren nach Anspruch 1, wobei die mindestens eine Eigenschaft aus der Menge ausgewählt wird, welche aus Farbe, Fluoreszenz, Form, Flächenausdehnung, Höhe und chemische Zusammensetzung besteht.

3. Verfahren nach einem der vorangehenden Ansprüche, wobei der zweite Code genau zwei Typen von Punkten (111, 112) verwendet, die sich durch genau zwei unterschiedliche Ausprägungen genau einer Eigenschaft voneinander unterscheiden.

4. Verfahren nach einem der vorangehenden Ansprüche, wobei die Punkte (111, 112) des ersten Punktmusters auf einem vorgegebenen Raster (190) angeordnet werden und/oder derart gebildet werden, dass sie als Erhebungen aus der zu bedruckenden Oberfläche (101) herausragen, wobei der erste Code vorzugsweise ein Braille-Code ist.

5. Anwendung des Verfahrens nach Anspruch 4 zur Braille-Beschriftung von Arzneimittelpackungen (100) mittels der ersten Information und zum Aufbringen einer Sicherheitsinformation mittels der zweiten Information.

6. Druckvorrichtung (1) zur Ausführung des Verfahrens nach einem der vorangehenden Ansprüche, beinhaltend
mindestens ein Reservoir(31, 32) für mindestens eine Druckzusammensetzung, mindestens einen mit dem mindestens einen Reservoir (31, 32) verbundenen Druckkopf (2) mit mindestens einer Düse (23, 24) zum Auftragen von Tropfen (35, 36) der Druckzusammensetzung auf eine zu bedruckende Oberfläche (101),
Transportmittel zur relativen gegenseitigen Bewegung des Druckkopfes (2) und der Oberfläche (101) und
Steuermittel (4) zur Steuerung des mindestens einen Druckkopfes (2), wobei die Druckvorrichtung (1) zum Drucken einer ersten Information eingerichtet ist, indem der mindestens eine Druckkopf (2) derart von den Steuermitteln (4) steuerbar ist, dass er Tropfen (35, 36) der Druckzusammensetzung gemäss einem ersten Code auf die Oberfläche (101) aufträgt, wodurch auf der Oberfläche (101) ein die erste Information codierendes erstes Punktmuster aus Punkten (111, 112) gebildet wird,
**dadurch gekennzeichnet,**
**dass** die Druckvorrichtung (1) zum Drucken einer zweiten Information eingerichtet ist, indem der mindestens eine Druckkopf (2) derart beschaffen und von den Steuermitteln (4) steuerbar ist, dass er bei der Bildung des ersten Punktmusters den Punkten (111, 112) gemäss einem zweiten Code unterschiedliche Ausprägungen mindestens einer Eigenschaft zuordnet, wodurch auf dem ersten Punktmuster ein die zweite Information codierendes zweites Punktmuster erzeugbar ist.

7. Druckvorrichtung (1) nach Anspruch 6, wobei mindestens zwei Reservoirs (31, 32) für mindestens zwei unterschiedliche Druckzusammensetzungen vorhanden sind und/oder im Druckkopf (2) mindestens zwei von den Steuermitteln (4) separat ansteuerbare Düsenmodule (21, 22) mit jeweils mindestens einer Düse (23, 24) vorhanden sind, wobei vorzugsweise jedes der mindestens zwei Düsenmodule (21, 22) mit genau einem der mindestens zwei Reservoirs (31, 32) verbunden ist.

8. Druckvorrichtung (1) nach Anspruch 6 oder 7, wobei der mindestens eine Druckkopf (2) mit dem mindestens einen Reservoir (31, 32) derart verbunden ist, dass ihm gas-und lichtgeschützt eine UV- oder Blaulicht-härtbare Druckzusammensetzung zuführbar ist, und der Druckkopf (2) mindestens ein Ventil (25, 26) und eine nachgeschaltete Düse (23, 24) zur Erzeugung und Abgabe von einzelnen Tropfen (35, 36) der Druckzusammensetzung in Richtung auf die Oberfläche (101) umfasst, wobei funktional in Druckrichtung nach der Düse (23, 24) mindestens eine Vorhärteeinheit (71, 72) am Druckkopf (2) angeordnet ist, die eine UV- oder Blaulicht-Quelle (73, 74) umfasst.

9. Druckerzeugnis (100), bei welchem punktbasiert codierte Information auf einer Oberfläche (101) aufgedruckt ist, wobei
auf der Oberfläche (101) ein eine erste Information gemäss einem ersten Code codierendes erstes Punktmuster aus Punkten (111, 112) aufgedruckt ist,
**dadurch gekennzeichnet,**
**dass** auf dem ersten Punktmuster ein eine zweite Information gemäss einem zweiten Code codierendes zweites Punktmuster aufgedruckt ist, das gebildet ist, indem den Punkten (111, 112) des ersten Punktmusters gemäss dem zweiten Code unterschiedliche Ausprägungen mindestens einer Eigenschaft zugeordnet sind.

10. Druckerzeugnis (100) nach Anspruch 9, wobei die Eigenschaft aus der Menge ausgewählt ist, welche aus Farbe, Fluoreszenz, Form, Flächenausdehnung, Höhe oder chemische Zusammensetzung besteht, wobei der zweite Code vorzugsweise genau zwei Typen von Punkten (111, 112) verwendet, die sich durch genau zwei unterschiedliche Ausprägungen genau einer Eigenschaft voneinander unterscheiden.

11. Druckerzeugnis (100) nach einem der Ansprüche 9 oder 10, wobei die Punkte (111, 112) des ersten Punktmusters auf einem vorgegebenen Raster (190) angeordnet sind und/oder als Erhebungen aus der Oberfläche (101) herausragen, wobei der erste Code ein Braille-Code ist.

12. Lesevorrichtung (200) zum Lesen eines Druckerzeugnisses (100) nach einem der Ansprüche 9-11, mit
einer Kamera (220) zur Aufnahme einer Oberfläche (101) des Druckerzeugnisses (100), auf welcher punktbasiert codierte Information aufgedruckt ist, **gekennzeichnet durch**
Unterscheidungsmittel (220, 230, 211, 212, 241, 242) zur Unterscheidung der unterschiedlichen Ausprägungen der mindestens einen Eigenschaft der Punkte (111, 112) des ersten Punktmusters.

13. Lesevorrichtung (200) nach Anspruch 12, wobei die Lesevorrichtung (200) eine Kamera (220) zur Aufnahme eines Bildes des zweiten Punktmusters beinhaltet und/oder die Lesevorrichtung (200) eine an die Kamera (220) angeschlossene Auswerteeinheit (230) zur Decodierung des zweiten Punktmusters und zur Übersetzung der zweiten Information vom zweiten Code in einen anderen Code beinhaltet.

14. Lesevorrichtung (200) nach Anspruch 13, wobei die Unterscheidungsmittel als in der Kamera (220) und/oder in der Auswerteeinheit (230) befindliche Mittel zur Bildverarbeitung ausgebildet sind.

15. Lesevorrichtung (200) nach einem der Ansprüche 12-14, wobei die Unterscheidungsmittel mindestens zwei zeitlich nacheinander einzeln einschaltbare Lichtquellen (211, 212) mit unterschiedlichen Emissionsspektren umfassen oder die Unterscheidungsmittel mindestens zwei zeitlich nacheinander einzeln einsetzbare optische Wellenlängenfilter (241, 242) mit unterschiedlichen Durchlasseigenschaften umfassen.

16. Verfahren zur Prüfung eines Druckerzeugnisses (100) nach einem der vorhergehenden Ansprüche, wobei
zwei auf das Druckerzeugnis (100) aufgedruckte Informationen gelesen werden und überprüft wird, ob die eine Information gemäss einer vorgegebenen Zuordnungsvorschrift der anderen Information zugeordnet ist,
**dadurch gekennzeichnet,**
**dass** eine der genannten Informationen die durch das zweite Punktmuster codierte zweite Information ist, und wobei die zwei gelesenen Informationen vorzugsweise an eine Datenbank (270) übermittelt werden und die Überprüfung der Zuordnung anhand von in der Datenbank (270) gespeicherten Daten erfolgt.
